# EUROPÄISCHE PATENTSCHRIFT

(11) **EP 2 948 656 B1**
(45) Veröffentlichungstag und Bekanntmachung des Hinweises auf die Patenterteilung: **03.03.2021**
(21) Anmeldenummer: 14700292.7
(22) Anmeldetag: 10.01.2014
(51) Int. Cl.: F16J 15/02, B21D 35/00, F16J 15/08, F01N 13/18, F16J 15/06

(54) **METALLBLECH-FLACHDICHTUNGSLAGE SOWIE VERFAHREN ZU IHRER HERSTELLUNG**
SHEET-METAL FLAT SEAL LAYER AND METHOD FOR THE PRODUCTION THEREOF
COUCHE D'ÉTANCHÉITÉ DE JOINT PLAT EN TÔLE MÉTALLIQUE ET SON PROCÉDÉ DE FABRICATION

(30) Priorität: 22.01.2013 DE 102013100612
(43) Veröffentlichungstag der Anmeldung: 02.12.2015
(73) Patentinhaber: ElringKlinger AG, 72581 Dettingen (DE)
(72) Erfinder: KULLEN, Wilhelm, 72584 Hülben (DE)
(74) Vertreter: Hoeger, Stellrecht & Partner Patentanwälte mbB
(86) Internationale Anmeldenummer: PCT/EP2014/050362
(87) Internationale Veröffentlichungsnummer: WO 2014/114504

(56) Entgegenhaltungen:
- DE-A1- 10 103 885
- DE-A1-102007 053 929
- DE-U1-202006 018 649
- FR-A1- 2 886 364
- US-B1- 6 189 895

## Beschreibung

Die Erfindung betrifft eine Metallblech-Flachdichtungslage bzw. eine ein- oder mehrlagige Flachdichtung mit einer solchen Metallblechlage, einen Rohling einer solchen Metallblechlage sowie ein Verfahren zur Herstellung einer solchen Flachdichtungslage.

Metallische Flachdichtungen bestehen häufig aus einer einstückigen Metallblechlage oder mehreren, aufeinander geschichteten und oft im Wesentlichen deckungsgleichen Metallblechlagen oder einer als Trägerlage fungierenden Metallblechlage, auf welcher ein- oder beidseitige Metallblech-Auflagen angeordnet sind. Üblicherweise erstreckt sich die eine Metallblechlage oder mindestens eine der Metallblechlagen über den ganzen, durch die Flachdichtung abzudichtenden sogenannten Dichtspalt zwischen zwei miteinander verbundenen Bauteilen.

Insbesondere betrifft die Erfindung metallische Flachdichtungen der geschilderten Art mit einer oder mehreren Mediendurchgangsöffnungen für Gase und/oder Flüssigkeiten, wobei diese Flachdichtungen den Mediendurchgangsöffnungen zugeordnete Medienabdichtvorrichtungen aufweisen - eine solche Medienabdichtvorrichtung kann beispielsweise die Gestalt einer eine Mediendurchgangsöffnung umschließenden federelastischen Sicke haben, welche in eine Metallblechlage einer solchen Flachdichtung eingeprägt wurde.

Vor allem bei größeren, höheren und hohen Betriebstemperaturen ausgesetzten metallischen Flachdichtungen, wie länglichen Auspuffkrümmer-, Ansaugkrümmer- und Zylinderkopfdichtungen für Mehrzylinder-Verbrennungsmotoren spielen die Materialkosten eine meist ausschlaggebende Rolle, da für diese Flachdichtungen teure Federstähle und/oder gegen hohe Temperaturen beständige Stähle verwendet werden müssen - in diesem Zusammenhang sei bemerkt, dass die Materialkosten auch dann hoch sind, wenn zunächst Stähle ohne federelastische Eigenschaften verarbeitet und diesen dann durch eine Wärmebehandlung federelastische Eigenschaften verliehen werden.

Im Zuge der von allen Dichtungsherstellern angestrebten Kostenreduzierung entstand nun das Grundkonzept der vorliegenden Erfindung, welches in Folgendem zu sehen ist: Jede metallische Flachdichtung hat mindestens einen eine Abdichtfunktion ausübenden Bereich und Bereiche ohne Abdichtfunktionen; bei Dichtungsbereichen mit Abdichtfunktionen handelt es sich insbesondere um solche, die abzudichtende Durchgangsöffnungen der Dichtungen umschließen und beispielsweise in Blechlagen eingeprägte Sicken aufweisen; an die Stelle einer solchen Abdichtsicke kann aber auch ein auf eine Blechlage aufgelegter Blechring oder dergleichen treten. Andererseits sind Dichtungsbereiche ohne Abdichtfunktionen für die Erfüllung der einer Flachdichtung übertragenen Aufgabe zumindest nahezu unwesentlich, so dass in solchen Bereichen Öffnungen und/oder Ausschnitte aus einer Metallblechlage einer Flachdichtung ausgestanzt und die dabei entstehenden Stanzabfälle recycelt werden können, was jedoch mit nicht unwesentlichen Kosten verbunden ist. Deshalb wird gemäß dem Grundkonzept der vorliegenden Erfindung vorgeschlagen, in demjenigen Bereich oder in mehreren Bereichen einer Metallblech-Flachdichtungslage, welchem bzw. welchen eine Abdichtfunktion nicht zukommt, die Festigkeit der Blechlage gegenüber der Festigkeit eines bzw. der dem betreffenden Bereich benachbarten Bereichs bzw. Bereiche so zu schwächen (beispielsweise durch lokale oder bereichsweise Schwächungen ihres Querschnitts oder durch eine örtliche Verschmälerung der Blechlage), dass sich dieser Bereich bzw. diese Bereiche durch eine Zugbeanspruchung der Blechlage in mindestens einer in der Lagenebene liegenden Richtung zumindest örtlich verformen und dadurch in der Lagenebene in mindestens einer Richtung recken lässt bzw. lassen. Auf diese Weise wird die Grundlage dafür geschaffen, zur Herstellung einer einstückigen Metallblech-Flachdichtungslage zunächst aus einem Metallblech einen Dichtungslagenrohling mit einer vorläufigen Außenkontur zu erzeugen, welche in mindestens einer in der Lagenebene liegenden Richtung kleiner als die endgültige Kontur der herzustellenden Flachdichtungslage ist, und sodann den geschwächten Lagenbereich bzw. die geschwächten Lagenbereiche durch eine Zugbeanspruchung zu verformen und dabei in der Lagenebene so zu recken, dass dadurch der Rohling mit der vorläufigen Außenkontur zumindest im Wesentlichen in die Flachdichtungslage mit ihrer vorgegebenen endgültigen Außenkontur überführt wird.

Beim Recken des Rohlings wird der geschwächte Lagenbereich im Allgemeinen zumindest an einer oder an mehreren Stellen plastisch verformt werden; bei einer mehrlagigen Flachdichtung ist aber auch eine Vorgehensweise möglich, bei der das Blech des Rohlings für die erfindungsgemäße Flachdichtungslage nur im elastischen Bereich des Blechs gereckt und die sich dadurch ergebende Dichtungslage sodann fixiert wird, und zwar durch Verbinden (beispielsweise durch Punktschweißen) mit einer anderen Flachdichtungslage aus einem kostengünstigeren Metall.

Dank der vorliegenden Erfindung wird für die Herstellung der Flachdichtungslage mit vorgegebener endgültiger Außenkontur deutlich weniger Material benötigt, nämlich nur das für die Herstellung des kleineren Rohlings erforderliche Metallblech. Insbesondere ermöglicht es die Erfindung, eine Flachdichtungslage so herzustellen, dass bei der Herstellung der einbaufertigen Flachdichtungslage bzw. Flachdichtung mit ihrer vorgegebenen endgültigen Außenkontur keine weiteren nennenswerten Stanzabfälle anfallen, nämlich zusätzlich zu denjenigen Stanzabfällen, welche bei der Herstellung des Rohlings sowie der Öffnungen, wie Mediendurchgangsöffnungen und Schraubenlöcher, unvermeidbar sind.

Unter der einbaufertigen Dichtungslage bzw. Flachdichtung wird die Dichtungslage bzw. Flachdichtung in derjenigen Form verstanden, in welcher sie für den Einbau bereitgestellt wird.

Ausgehend von einem Verfahren zur Herstellung einer einstückigen Metallblech-Flachdichtungslage, welche bei einbaufertiger Flachdichtung eine vorgegebene endgültige Außenkontur, mindestens einen mit mindestens einer Mediendurchgangsöffnung versehenen ersten Lagenbereich sowie, in einer Draufsicht auf die Dichtungslage, außerhalb des ersten Lagenbereichs mindestens einen zweiten Lagenbereich aufweist und eine Lagenebene definiert, lässt sich das Grundkonzept der vorliegenden Erfindung dadurch verwirklichen, dass aus einem Metallblech ein Dichtungslagenrohling mit einer vorläufigen Außenkontur ausgeschnitten wird, welche in mindestens einer in der Lagenebene liegenden ersten Richtung kleiner als die endgültige Außenkontur der Flachdichtungslage ist, und dass mindestens ein Teilbereich des zweiten Lagenbereichs durch eine in der ersten Richtung erfolgende Zugbeanspruchung des Rohlings so gereckt wird, dass dadurch die vorläufige Außenkontur zumindest im Wesentlichen in die endgültige Außenkontur der Flachdichtungslage überführt wird.

Bevorzugte Ausführungsformen des erfindungsgemäßen Verfahrens, durch welche sich die für das Recken des Rohlings erforderlichen Zugkräfte minimieren lassen, zeichnen sich dadurch aus, dass in dem Teilbereich des zweiten Lagenbereichs mehrere Durchbrüche erzeugt werden, welche in einer Draufsicht auf den Rohling so gestaltet, orientiert und angeordnet sind, dass durch die Zugbeanspruchung des Rohlings die Durchbrüche in der ersten Richtung aufweitbar sind, und dass der Teilbereich durch die Zugbeanspruchung gereckt und dabei so verformt wird, dass dadurch die Durchbrüche in der ersten Richtung aufgeweitet werden und die vorläufige Außenkontur zumindest im Wesentlichen in die endgültige Außenkontur überführt wird. Dabei soll das Wort "Durchbrüche" besagen, dass sich diese durch die Blechlage hindurcherstrecken, das heißt sich über die gesamte Dicke der Blechlage erstrecken.

Unter einer einstückigen Flachdichtungslage soll eine Metallblechlage verstanden werden, welche aus einem einzigen Blechstück besteht, das heißt nicht aus mehreren Blechstücken, welche beispielsweise durch Schweißnähte miteinander verbunden sind.

Ferner ist unter der vorgegebenen endgültigen Außenkontur der Flachdichtungslage deren Außenkontur bei noch nicht eingebauter und nicht beanspruchter Flachdichtung zu verstehen.

Wenn vorstehend davon die Rede ist, dass durch das Recken des Rohlings dessen vorläufige Außenkontur zumindest im Wesentlichen in die endgültige Außenkontur der Flachdichtungslage überführt wird, soll dadurch zum Ausdruck gebracht werden, dass die Außenkontur des gereckten Rohlings nur in der ersten Richtung, das heißt nur in Richtung der aufgebrachten Zugbeanspruchung mit der endgültigen Außenkontur übereinstimmt, das heißt es soll nicht ausgeschlossen werden, dass der gereckte Rohling unter Umständen beispielsweise durch Stanzen noch einmal nachbearbeitet wird, um überall die gewünschten endgültigen Konturen der einbaufertigen Flachdichtungslage zu erreichen. Gründe für eine solche Nachbearbeitung können beispielsweise die folgenden sein: Beim Recken des mindestens einen Teilbereichs des zweiten Lagenbereichs kann sich die quer zur Richtung der Zugbeanspruchung gemessene Breite des zweiten Lagenbereichs zumindest örtlich vermindern, und da der Rohling unter dem Einfluss der Zugbeanspruchung unter Umständen auch außerhalb des zweiten Lagenbereichs verformt wird, kann es empfehlenswert sein, eine oder mehrere Mediendurchgangsöffnungen sowie andere Öffnungen und Löcher erst nach dem Recken des Rohlings in der Dichtungslage zu erzeugen, insbesondere aus dieser auszustanzen.

Zum Recken des geschwächten und insbesondere mit Durchbrüchen versehenen Teilbereichs des Rohlings können Außenrandbereiche des Rohlings, welche sich in Richtung der Zugbeanspruchung ungefähr gegenüberliegen, und/oder dem Teilbereich unmittelbar benachbarte Bereiche des Rohlings und/oder ein Rohling-Außenrandbereich sowie ein dem Teilbereich unmittelbar benachbarter Rohlingbereich eingespannt und die Zugkräfte über diese eingespannten Bereiche in das Blech des Rohlings eingeleitet werden.

Es wird aber noch darauf hingewiesen, dass durch die Schwächung des Blechs in dem zu reckenden Teilbereich die für das Recken dieses Teilbereichs erforderlichen Zugkräfte so klein gehalten werden können, dass diese nicht zu einer Verformung anderer Bereiche des Rohlings führen, insbesondere nicht zu einer Änderung der Gestalt und/oder der Lage von Medien- oder anderen Durchgangsöffnungen, welche vor dem Recken des Teilbereichs in den Rohling eingebracht wurden.

Beim Recken des durch Durchbrüche geschwächten Teilbereichs können die den Durchbrüchen benachbarten Blechbereiche die Tendenz haben, sich gegenüber der Lagenebene schräg zu stellen und dann aus der Lagenebene herauszuragen. In diesem Fall kann der gereckte Teilbereich durch Pressen wieder abgeflacht werden.

Wie sich aus dem Vorstehenden ergibt, betrifft die Erfindung auch einen Rohling (oft auch als Platine bezeichnet) einer einstückigen Metallblechlage einer Flachdichtung, deren Metallblechlage bei einbaufertiger (das heißt noch nicht gepresster) Flachdichtung eine vorgegebene Außenkontur aufweist, wobei der Rohling mindestens einen mit mindestens einer Mediendurchgangsöffnung versehenen bzw. noch zu versehenden ersten Lagenbereich sowie, in einer Draufsicht auf den Rohling, außerhalb des ersten Lagenbereichs mindestens einen zweiten Lagenbereich und eine vorläufige Außenkontur aufweist, welche in einer vom ersten zum zweiten Lagenbereich führenden Richtung kleiner als die vorgegebene Außenkontur ist; erfindungsgemäß zeichnet sich ein solcher Rohling dadurch aus, dass die Blechlage aus einem in der Lagenebene verformbaren metallischen Material besteht und in mindestens einem Teilbereich des zweiten Lagenbereichs so gestaltet ist, dass dieser Teilbereich durch eine Zugbeanspruchung in der Lagenebene und in der vorgenannten ersten Richtung reckbar und dadurch die vorläufige Außenkontur des Rohlings in der ersten Richtung bis zu der vorgegebenen Außenkontur vergrößerbar ist.

Damit sich der Rohling mit möglichst kleinen Zugkräften hinreichend recken lässt, werden Ausführungsformen des Rohlings empfohlen, bei denen der Teilbereich des zweiten Lagenbereichs mehrere Durchbrüche aufweist, welche in einer Draufsicht auf die Blechlage so gestaltet, orientiert und angeordnet sind, dass die Durchbrüche durch eine Zugbeanspruchung des Rohlings in der Lagenebene und in einer vom ersten zum zweiten Lagenbereich führenden Richtung aufweitbar und dadurch die vorläufige Außenkontur des Rohlings in Richtung der Zugbeanspruchung um ein vorgegebenes Maß vergrößerbar ist.

Auch bei dem Rohling soll die Angabe, dass der zweite Lagenbereich außerhalb des ersten Lagenbereichs liegt, bedeuten, dass sich in einer Draufsicht auf den Rohling der erste und der zweite Lagenbereich nicht überschneiden.

Wenn aus dem Rohling eine Metallblechlage mit Federstahleigenschaften hergestellt werden soll, kann es vorteilhaft sein, für die Herstellung des Rohlings ein noch verhältnismäßig leicht umformbares Blech aus einem Stahl zu verwenden, welchem durch eine Wärmebehandlung federelastische Eigenschaften verliehen werden können, und den Rohling nach dem Recken seines mindestens einen Teilbereichs einer geeigneten Wärmebehandlung zu unterziehen.

Bei bevorzugten Ausführungsformen des erfindungsgemäßen Rohlings werden mindestens mehrere der Durchbrüche von linienförmigen Stanzschnitten gebildet und/oder wird mindestens einer der Durchbrüche von einer sich durch die Blechlage hindurch erstreckenden Aussparung gebildet.

Damit sich der zu reckende mindestens eine Teilbereich des Rohlings ohne allzu große Zugkräfte in erheblichem Maß recken lässt, werden Ausführungsformen des erfindungsgemäßen Rohlings empfohlen, bei denen die Durchbrüche länglich gestaltet sind und im Wesentlichen quer zur Richtung der vorgegebenen Vergrößerung der Außenkontur des Rohlings verlaufen, wobei es besonders vorteilhaft ist, wenn der Rohling mehrere Gruppen von länglichen Durchbrüchen aufweist und jede Gruppe mehrere in Längsrichtung der Durchbrüche hintereinander angeordnete Durchbrüche umfasst, wobei die Durchbrüche einer jeden Gruppe gegenüber den Durchbrüchen einer benachbarten Gruppe in Längsrichtung der Durchbrüche versetzt sind.

Die Erfindung betrifft schließlich eine Flachdichtung mit mindestens einer eine Lagenebene definierenden einstückigen Metallblech-Dichtungslage, welche mindestens einen mit mindestens einer Mediendurchgangsöffnung versehenen ersten Lagenbereich sowie, in einer Draufsicht auf die Blechlage, außerhalb des ersten Lagenbereichs mindestens einen zweiten Lagenbereich und bei einbaufertiger Flachdichtung eine vorgegebene Außenkontur aufweist, wobei die Flachdichtung für die Mediendurchgangsöffnung vorzugsweise eine Letzterer zugeordnete Medienabdichtvorrichtung aufweist, welche in bzw. an der vorstehend erwähnten einstückigen Metallblechlage und/oder in bzw. an einer anderen Flachdichtungslage vorgesehen sein kann; die Erfindung betrifft also sowohl einlagige, als auch mehrlagige Flachdichtungen.

Um für die Herstellung einer solchen einstückigen Metallblechlage weniger Blech zu benötigen und den Anfall von Stanzabfällen zu minimieren, wird die vorstehend erwähnte Blechlage für eine Flachdichtung erfindungsgemäß so gestaltet, dass in einer Draufsicht auf die Blechlage mindestens ein außerhalb der gegebenenfalls vorgesehenen Medienabdichtvorrichtung liegender Teilbereich ("außerhalb" soll dabei nur bedeuten, dass sich in einer Draufsicht die Medienabdichtvorrichtung und der Teilbereich nicht überschneiden) des zweiten Lagenbereichs der einbaufertigen Flachdichtung von einem zur Erzielung der vorgegebenen Außenkontur in der Lagenebene gereckten Bereich der Blechlage gebildet wird.

Auch für die erfindungsgemäße Dichtungslage gilt, dass bei bevorzugten Ausführungsformen der gereckte Teilbereich zumindest örtlich von plastisch verformten Zonen des Metallblechs gebildet wird, um so eine Dichtungslage zu erhalten, welche ohne weitere Maßnahmen ihre Gestalt beibehält.

Um für das Recken mindestens eines Teilbereichs des weiten Lagenbereichs mit einer möglichst geringen Zugbeanspruchung des Blechs auszukommen, werden Ausführungsformen empfohlen, bei denen der gereckte Teilbereich in einer Draufsicht auf die Dichtungslage zwischen schräg zueinander verlaufenden Blechstegen wenigstens eine Aussparung aufweist. Dadurch, dass der erwähnte Teilbereich bei der Herstellung der fertigen Dichtungslage gereckt wird, ergeben sich bei der Erzeugung der endgültigen Aussparung bzw. Aussparungen keine oder höchstens minimale Stanzabfälle, da in der vor dem Recken vorliegenden Vorstufe der Dichtungslage die im Blech vorgesehenen und zu den endgültigen Aussparungen führenden Durchbrüche viel kleiner als in der endgültigen Dichtungslage sind und gegebenenfalls die Form schmälster Schlitze haben.

Wenn vorstehend von der einbaufertigen Flachdichtung die Rede war, so ist hierunter die noch nicht beanspruchte und noch nicht eingebaute Flachdichtung zu verstehen.

Die Blechstege können unter Winkeln von größer als 0° und kleiner als 180° schräg zueinander verlaufen.

Unter den Aussparungen sind vorzugsweise solche zu verstehen, welche sich durch die gesamte Dicke der Blechlage hindurch erstrecken.

Schließlich soll die Blechlage in dem Sinne einstückig sein, dass sie auch nicht aus mehreren, beispielsweise durch Schweißnähte miteinander verbundenen Blechstücken besteht.

Dass der mit den Aussparungen versehene Teilbereich von einem gereckten und dabei plastisch verformten Blechbereich gebildet wird, lässt sich an der fertigen Dichtungslage verifizieren, beispielsweise anhand des in einem Schliffbild erkennbaren Gefüges des gereckten metallischen Bereichs oder der Ermittlung der in diesem Bereich vorliegenden inneren Spannungen, und durch diesen gereckten Blechbereich zeichnet sich eine erfindungsgemäße Dichtungslage auch gegenüber einer Blechlage bekannter metallischer Flachdichtungen aus, welche in der US 6,189,895 B1 offenbart werden:
Dieses Dokument betrifft speziell metallische Flachdichtungen, welche zwischen einem Zylinderkopf und einem Auspuffkrümmer eines Verbrennungsmotors anzuordnen sind (sh. beispielsweise den dritten Absatz der Sp. 1) und mehrere, in Reihe hintereinander angeordnete erste Dichtungsbereiche mit jeweils einer Abgas-Durchgangsöffnung sowie zwischen diesen ersten Dichtungsbereichen zweite Dichtungsbereiche aufweisen, die von einer einstückigen, sich über die gesamte Flachdichtung erstreckenden Metallblechlage gebildet werden und so gestaltet sind, dass sie sich im Motorbetrieb in Längsrichtung der Flachdichtung reversibel verlängern und wieder verkürzen lassen, um dem Umstand Rechnung zu tragen, dass sich der Auspuffkrümmer in Längsrichtung der Flachdichtung ausdehnt, wenn der Motor in Betrieb genommen und seine Leistung gesteigert wird, sich aber auch wieder abkühlt und in Dichtungslängsrichtung schrumpft, wenn der Motor mit weniger Leistungsabgabe oder im Leerlauf betrieben oder wieder abgeschaltet wird. Die in den Fig. 2 und 6 bis 12 der US 6,189,895 B1 gezeigten Auspuffkrümmerdichtungen haben jeweils eine Dichtungslage mit zwischen den vorstehend erwähnten ersten Dichtungsbereichen liegenden zweiten Dichtungsbereichen, welche ausgetanzte Aussparungen aufweisen, die ein Längen und ein Schrumpfen der zweiten Dichtungsbereiche in Dichtungslängsrichtung ermöglichen, ohne dass dadurch die Dichtung beschädigt oder gar zerstört wird. Aus der US 6,189,895 B1 ergibt sich jedoch mit aller Eindeutigkeit, dass bei der Herstellung dieser bekannten Flachdichtungen diejenige Dichtungslage, welche die erwähnten zweiten Dichtungsbereiche aufweist, mit ihrer endgültigen Gestalt und damit mit den Aussparungen in deren endgültiger Gestalt aus dem für diese Dichtungslage verwendeten Blech ausgestanzt wird. Infolgedessen lassen sich alle diejenigen Stanzabfälle nicht vermeiden, welche beim Ausstanzen der Aussparungen entstehen; ein Vergleich der beispielsweise in Fig. 2 der US 6,189,895 B1 dargestellten Flachdichtung mit einer entsprechenden Flachdichtung gemäß der vorliegenden Erfindung zeigt aber auch, dass für die Herstellung der mit den Aussparungen versehenen Dichtungslage der bekannten Flachdichtung ein viel längeres Blechstück als für die Herstellung der Dichtungslage gemäß der vorliegenden Erfindung benötigt wird und dass zwischen den mit den Abgas-Durchgangsöffnungen versehenen ersten Lagenbereichen der bekannten Flachdichtung deutlich größere Stanzabfälle anfallen als bei der Herstellung einer vergleichbaren erfindungsgemäße Dichtungslage.

Erwähnt werden soll aber auch noch, dass sich eine gemäß der vorliegenden Erfindung gestaltete Flachdichtung ebenso gut an durch Temperaturschwankungen hervorgerufene Längenänderungen der bei eingebauter Flachdichtung diese zwischen sich aufnehmenden Bauteile anpassen kann wie die sich aus der US 6,189,895 B1 ergebenden bekannten Flachdichtungen.

Aus der FR 2 886 364 A1 ergibt sich eine längliche metallische Flachdichtung mit mindestens einer Metallblech-Dichtungslage zum Einbau zwischen Bauteilen, deren im Betrieb auftretende thermische Ausdehnung und Kontraktion (in Dichtungslängsrichtung) von derjenigen der Flachdichtung abweicht. Die Dichtungslage hat der Abdichtung dienende und mit jeweils einer Mediendurchgangsöffnung versehene erste Dichtungsbereiche sowie zwischen den Letzteren Verbindungsbereiche, wobei jeder dieser Verbindungsbereiche einen elastisch deformierbaren Teilbereich mit einem wellenförmigen Profil aufweist. Diese elastisch deformierbaren Teilbereiche dienen dazu, im Betrieb zwischen den Dichtungsbereichen auftretende Dehnungen und Kontraktionen zu absorbieren, indem sie elastisch und damit reversibel verlängert und wieder verkürzt werden, damit die Flachdichtung betriebsbedingten Ausdehnungen und Kontraktionen der die Flachdichtung zwischen sich aufnehmenden Bauteile folgen kann, ohne dabei beschädigt zu werden.

Nur der Vollständigkeit halber soll bezüglich des Standes der Technik noch auf die Figuren 9 bis 11 der US 4,728,110 A sowie die Figuren 10 bis 13 der US 5,022,661 A hingewiesen werden, welche alle gleichfalls metallische Auspuffkrümmerdichtungen zeigen, die zwischen mit Abgasdurchgangsöffnungen versehenen ersten Dichtungsbereichen zweite Dichtungsbereiche aufweisen, welche im Motorbetrieb in Dichtungslängsrichtung reversibel expandieren und wieder schrumpfen können jedoch weisen auch diese bekannten Dichtungen nicht die spezifischen Vorteile einer Flachdichtung gemäß der vorliegenden Erfindung auf.

Eine Einlasskrümmerdichtung, welche eine gewisse Ähnlichkeit mit den sich aus den Figuren 6 und 12 der US 6,189,895 B1 ergebenden Auslasskrümmerdichtungen hat, ergibt sich schließlich aus der US 5,590,888 A, jedoch handelt es sich bei dieser Einlasskrümmerdichtung um eine reine Elastomerdichtung, das heißt sie wird aus einem elastomeren Material hergestellt.

Weist eine erfindungsgemäße Flachdichtung bzw. Dichtungslage mehrere erste Lagenbereiche auf und sind wenigstens zwei einander benachbarte erste Lagenbereiche über mindestens einen zweiten Lagenbereich miteinander verbunden, empfiehlt sich eine Gestaltung, bei der die Blechstege schräg zur Richtung einer geraden Linie verlaufen, welche Zentren von dem zweiten Lagenbereich benachbarten Mediendurchgangsöffnungen miteinander verbinden, da sich bei einer solchen Ausführungsform der der Bildung des zweiten Lagenbereichs dienende Blechbereich mit besonders geringen Zugkräften recken lässt.

Bei einer erfindungsgemäßen Flachdichtung bzw. Dichtungslage kann der zweite Lagenbereich aber auch einen nach außen ragenden Vorsprung der Flachdichtung bzw. Dichtungslage bilden, wobei es dann der Minimierung der für das Recken der Blechlage erforderlichen Zugkräfte dient, wenn die Blechstege schräg zu derjenigen Richtung verlaufen, in welcher der Vorsprung im Wesentlichen über die übrige Blechlage übersteht.

Sowohl hinsichtlich der Minimierung der für das Recken der Blechlage erforderlichen Zugkräfte, als auch für die Erzielung eines möglichst großen Effekts durch das Recken ist es besonders vorteilhaft, wenn der gereckte Teilbereich der Dichtungslage von einem Streckmetallbereich der Blechlage gebildet wird.

Weitere Merkmale, Vorteile und Einzelheiten der Erfindung ergeben sich aus der beigefügten zeichnerischen Darstellung sowie der nachfolgenden Beschreibung besonders empfehlenswerter Ausführungsformen der Erfindung; in der Zeichnung zeigen:
- Fig. 1:: einen Teil einer erfindungsgemäßen Flachdichtungslage einer sogenannten Krümmerdichtung, wobei die Fig. 1 unten die Flachdichtungslage im einbaufertigen Zustand und oben einen Rohling für diese Flachdichtungslage vor dem Recken des Rohlings zeigt und es sich bei der Dichtung um eine Auspuffkrümmer- oder eine Einlasskrümmerdichtung für einen Verbrennungsmotor handeln soll;
- Fig. 2 und 3:: Draufsichten auf jeweils einen Teil einer zweiten bzw. einer dritten Ausführungsform einer erfindungsgemäßen Dichtungslage;
- Fig. 4:: eine Draufsicht auf einen Teil eines Rohlings für eine vierte Ausführungsform einer erfindungsgemäßen Dichtungslage, und zwar vor dem Recken des Rohlings;
- Fig. 5:: eine Draufsicht auf einen kleinen Randbereich eines Rohlings für eine fünfte Ausführungsform einer erfindungsgemäßen Dichtungslage, und zwar wiederum vor dem Recken des Rohlings;
- Fig. 6A:: zwei Rohlinge für Dichtungslagen einer sechsten Ausführungsform der Erfindung, wobei die Rohlinge für die in der fertigen Flachdichtung zumindest im Wesentlichen deckungsgleich übereinander angeordneten Dichtungslagen in Fig. 6 gegeneinander verschoben dargestellt wurden;
- Fig. 6B:: die aus den zwei Rohlingen hergestellten Dichtungslagen in einer der Fig. 6A entsprechenden Darstellungsweise, und
- Fig. 7:: eine siebte Ausführungsform der Erfindung.

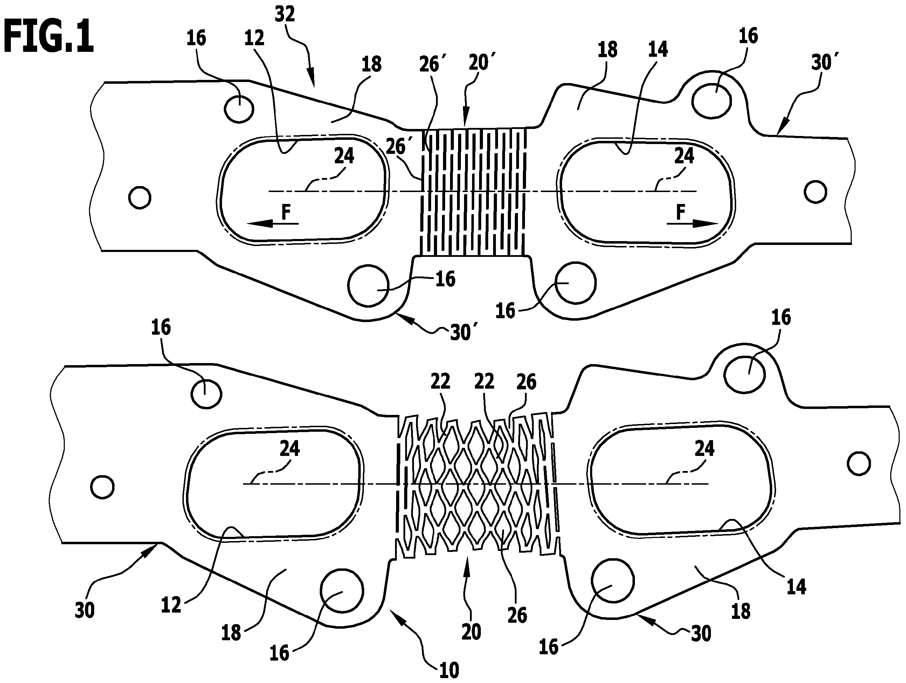

Die Fig. 1 zeigt unten einen Teil einer Metallblech-Flachdichtungslage 10, bei der es sich um eine Dichtungslage einer mehrlagigen Flachdichtung oder um die einzige Lage einer einlagigen Dichtung handeln kann, und zwar im Falle der dargestellten Ausführungsform um eine sogenannte Krümmerdichtung, insbesondere um eine Auspuffkrümmerdichtung zum Einbau zwischen einem Zylinderkopf und einem Auspuffkrümmer eines Mehrzylinder-Verbrennungsmotors.

Die Dichtungslage 10 hat mehrere Gasdurchgangsöffnungen, von denen die Fig. 1 nur die beiden Gasdurchlassöffnungen 12 und 14 zeigt, außerdem aber noch einige Löcher, beispielsweise mehrere Schraubenlöcher 16 für den Durchtritt von Montageschrauben, mit deren Hilfe die Flachdichtung zwischen Bauteilen, im vorliegenden Fall zwischen einem Zylinderkopf und einem Auspuffkrümmer eingespannt wird.

Der in Fig. 1 unten gezeigte Teil der einstückigen Dichtungslage 10 umfasst zwei erste Lagenbereiche 18 mit den Gasdurchgangsöffnungen 12, 14 sowie einen zwischen diesen ersten Lagenbereichen angeordneten und die Letzteren miteinander verbindenden zweiten Lagenbereich 20, welcher nach Art eines Streckmetalls ausgebildet ist und schräg zueinander verlaufende Blechstege 22 aufweist, welche auch schräg zu einer Linie 24 verlaufen, die Zentren der Gasdurchgangsöffnungen 12 und 14 miteinander verbindet und bei der dargestellten Ausführungsform der erfindungsgemäßen Dichtungslage in deren Längsrichtung verläuft.

Zwischen den Blechstegen 22 weist der zweite Lagenbereich 20 eine Vielzahl von Aussparungen 26 auf, da es sich bei dem Lagenbereich 20 um eine Zone der Dichtungslage 10 handeln soll, welche keine Abdichtfunktion besitzt.

Die Dichtungslage 10 ist mit nur in Fig. 1 strichpunktiert angedeuteten Gasabdichtvorrichtungen versehen, insbesondere mit in die Blechlage eingeprägten Abdichtsicken, welche die Gasdurchgangsöffnungen 12, 14 jeweils geschlossen umgeben.

Die im unteren Teil der Fig. 1 dargestellte einbaufertige Dichtungslage 10 hat eine endgültige Außenkontur 30, welche sich von der vorläufigen Außenkontur 30' eines im oberen Teil der Fig. 1 dargestellten Rohlings 32, aus dem die Dichtungslage 10 hergestellt wird, unterscheidet, und zwar bei den in der Fig. 1 dargestellten Ausführungsformen der fertigen Dichtungslage 10 und des Rohlings 32 im Wesentlichen nur dadurch, dass die Außenkontur 30 der Dichtungslage 10 in Richtung der Linie 24 größer ist als die Außenkontur 30' des Rohlings 32.

Der obere Teil der Fig. 1 zeigt nur einen Teil des aus einem Metallblech ausgestanzten Rohlings 32, wobei dieser Teil des Rohlings dem im unteren Teil der Fig. 1 gezeigten Teil der fertigen Dichtungslage 10 entspricht, weshalb im oberen Teil der Fig. 1 soweit möglich dieselben Bezugszeichen verwendet wurden wie im unteren Teil der Fig. 1, und erfindungsgemäß sind alle Bereiche des Rohlings 32 mit Ausnahme eines (mittleren) zweiten Lagenbereichs 20' mit den entsprechenden Bereichen der fertigen Dichtungslage 10 deckungsgleich gestaltet, so dass sich die Außenkontur 30' des Rohlings 32 nur an der Stelle des zweiten Lagenbereichs 20' von der Außenkontur 30 der fertigen Dichtungslage 10 unterscheidet, und zwar im Wesentlichen nur durch die in Richtung der Linie 24 gemessene Länge des zweiten Lagenbereichs 20', welche kleiner als die Länge des zweiten Lagenbereichs 20 der fertigen Dichtungslage 10 ist. Insbesondere besteht also Identität zwischen der fertigen Dichtungslage 10 und dem Rohling 32 hinsichtlich der Größe und Gestalt der Gasdurchgangsöffnungen 12, 14 und der Schraubenlöcher 16 sowie der Positionen der Gasdurchgangsöffnungen und Schraubenlöcher relativ zueinander und zu der Außenkontur 30 bzw. der Außenkontur 30'.

Erfindungsgemäß wurde beim Ausstanzen des Rohlings 32 in dessen zweitem Lagenbereich 20' eine Vielzahl von Stanzschnitten 26' erzeugt, welche vorzugsweise die Gestalt gerader Linien haben und sich insbesondere senkrecht zur Linie 24 erstrecken, mit dem Lot auf die Linie 24 aber auch einen kleinen spitzen Winkel bilden könnten. Bei der dargestellten Ausführungsform sind die Stanzschnitte 26' in mehreren senkrecht zur Linie 24 orientierten Gruppen angeordnet, wobei die Stanzschnitte einer jeden Gruppe gegenüber den Stanzschnitten einer benachbarten Gruppe in Längsrichtung der Stanzschnitte versetzt sind.

Zur Herstellung der fertigen Dichtungslage 10 aus dem Rohling 32 wird Letzterer einer Zugbeanspruchung in Richtung der Linie 24 unterworfen, und zwar einer Zugbeanspruchung einer solchen Größe, welche gerade ausreichend ist, um die von den Stanzschnitten 26' gebildeten Durchbrüche so aufzuweiten, dass sich die Aussparungen 26 der fertigen Dichtungslage 10 ergeben - die diese Zugspannung erzeugenden Kräfte wurden im oberen Teil der Fig. 1 durch die beiden Pfeile F angedeutet; für das Einbringen dieser Zugbeanspruchung in die den Rohling 32 bildende Blechlage können die in Fig. 1 nicht gezeigten Längsendbereiche des Rohlings 32 eingespannt und in Richtung der Linie 24 voneinander weggezogen werden, es sind aber auch mehrere Alternativen möglich, beispielsweise eine Alternative, bei der die ersten Lagenbereiche 18 des Rohlings 32 zu beiden Seiten des zweiten Lagenbereichs 20' eingespannt und in Richtung der Linie 24 voneinander weggezogen werden.

Wenn zur Herstellung der fertigen Dichtungslage 10 der zweite Lagenbereich 20' des Rohlings 32 in Richtung der Linie 24 gereckt wird, wird das Metall des den Rohling 32 bildenden Blechs zumindest im Wesentlichen nur an den Enden der Blechstege 22 dauerhaft, das heißt plastisch verformt.

Wenn der zweite Lagenbereich 20' des Rohlings 32 durch eine solche Zugbeanspruchung in Richtung der Linie 24 gereckt und in den zweiten Lagenbereich 20 der Dichtungslage 10 überführt wird, können sich jedoch Blechstege 22 ergeben, welche um ihre Längsachsen verdreht sind und deshalb aus der von der Dichtungslage 10 definierten Lagenebene herausragen; dann kann es zweckmäßig sein, den gereckten Lagenbereich flachzupressen, so dass sich ein ebener zweiter Lagenbereich 20 der fertigen Dichtungslage 10 ergibt.

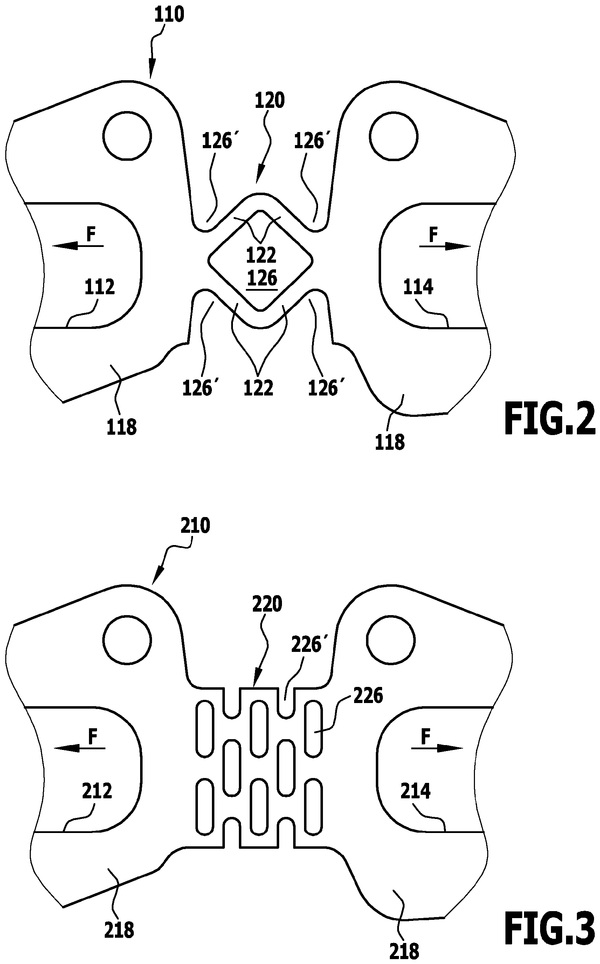

Anhand der Figuren 2 bis 7 werden im Folgenden weitere Ausführungsformen der Erfindung erläutert.

Die Figuren 2 und 3 zeigen jeweils einen Teil einer zweiten und einer dritten Ausführungsform einer erfindungsgemäßen Flachdichtungslage 110 bzw. 210, von denen jede bis auf ihren zweiten Lagenbereich 120 bzw. 220 ähnlich gestaltet ist wie die im unteren Teil der Fig. 1 gezeigte Flachdichtungslage 10. In den Figuren 2 und 3 wurden die ersten Lagenbereiche mit 118 bzw. 218 und die Gasdurchgangsöffnungen mit 112 und 114 bzw. 212 und 214 bezeichnet.

Bei der Ausführungsform gemäß Fig. 2 weist der zweite Lagenbereich 120 Blechstege 122 und Aussparungen 126, 126' auf und besitzt eine rautenförmige Gestalt mit einer zentralen Öffnung in Form der Aussparung 126. Aus der vorstehenden Beschreibung der Fig. 1 wird verständlich, dass ein für die Herstellung der in Fig. 2 gezeigten Flachdichtungslage 110 verwendeter Rohling einen zwischen den beiden ersten Lagenbereichen 118 liegenden zweiten Lagenbereich hat, welcher Stanzschnitte aufweist, die beim Recken dieses zweiten Lagenbereichs in Richtung der beiden in die Fig. 2 eingezeichneten Pfeile F zu den Aussparungen 126 und 126' führen.

Bei der Ausführungsform gemäß Fig. 3 weist der zweite Lagenbereich 220 längliche Aussparungen 226 und 226' auf, welche ungefähr die Gestalt eines flachen Ovals bzw. eines Teils eines flachen Ovals haben und sich durch Recken eines Rohlings in Richtung der Pfeile F ergeben, welcher in seinem zweiten Lagenbereich Ausstanzungen ähnlich den Stanzschnitten 26' des in Fig. 1 gezeigten Rohlings 32 aufweist.

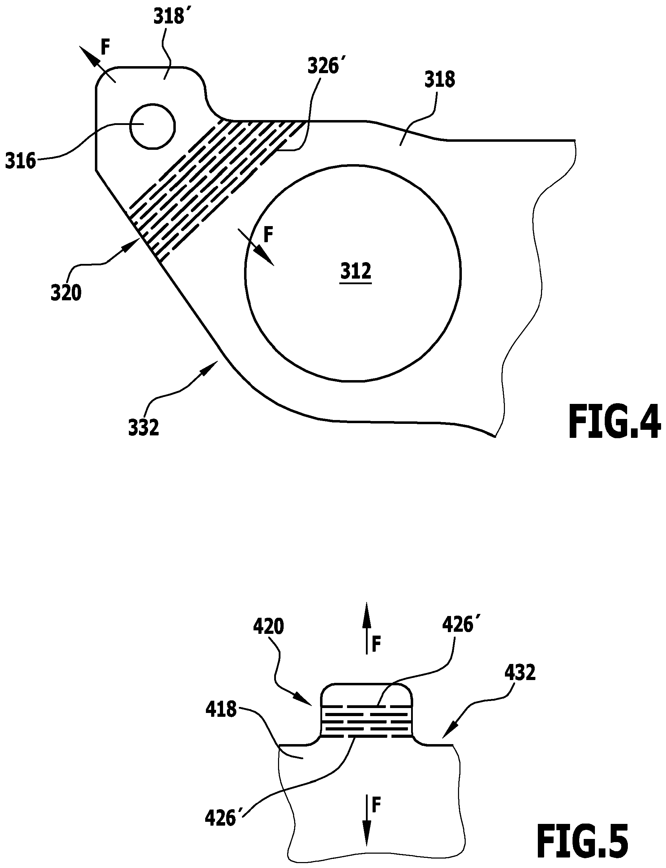

Die Fig. 4 zeigt einen Teil eines Rohlings 332 für die Herstellung einer erfindungsgemäßen Flachdichtungslage; der dargestellte Teil dieses Rohlings hat eine Mediendurchgangsöffnung 312 in einem ersten Lagenbereich 318 und ein Schraubenloch 316 in einem weiteren ersten Lagenbereich 318' und weist zwischen diesen beiden ersten Lagenbereichen 318, 318' einen zweiten Lagenbereich 320 auf, welcher mit Stanzschnitten 326' versehen wurde. Zur Herstellung einer fertigen erfindungsgemäßen Flachdichtungslage wird der Rohling 332 einer Zugbeanspruchung unterworfen, erzeugt durch Zugkräfte entsprechend den beiden in die Fig. 4 eingezeichneten Pfeilen F, so dass aus den Stanzschnitten 326' Aussparungen ähnlich den Aussparungen 26 der in Fig. 1 dargestellten Dichtungslage 10 entstehen.

Die Fig. 5 zeigt einen kleinen Außenrandbereich eines Rohlings 432, der einen ersten Lagenbereich 418 und in seinem dargestellten Außenrandbereich einen als Vorsprung gestalteten zweiten Lagenbereich 420 aufweist, der mit Stanzschnitten 426' versehen ist. Wird der in Fig. 5 gezeigte Außenrandbereich des Rohlings 432 einer Zugbeanspruchung entsprechend den beiden in die Fig. 5 eingezeichneten Pfeilen F unterworfen, das heißt wird der als Vorsprung gestaltete zweite Lagenbereich 420 gemäß Fig. 5 nach oben gereckt, werden die Stanzschnitte 426' zu Aussparungen ähnlich den in Fig. 1 gezeigten Aussparungen 26 aufgeweitet und der als Vorsprung gestaltete zweite Lagenbereich 420 gemäß Fig. 5 nach oben verlängert.

Die Figuren 4 und 5 lassen erkennen, dass der Rohling 332 bzw. 432 aus einem Blechstück ausgestanzt werden kann, welches kleiner ist als ein für das Ausstanzen der fertigen Flachdichtungslage erforderliches Blechstück, weil bei dem Rohling 332 der erste Lagenbereich 318' und bei dem Rohling 432 der zweite Lagenbereich 420 weniger weit über die benachbarten Rohlingsbereiche übersteht als dies in der fertigen Flachdichtungslage der Fall ist.

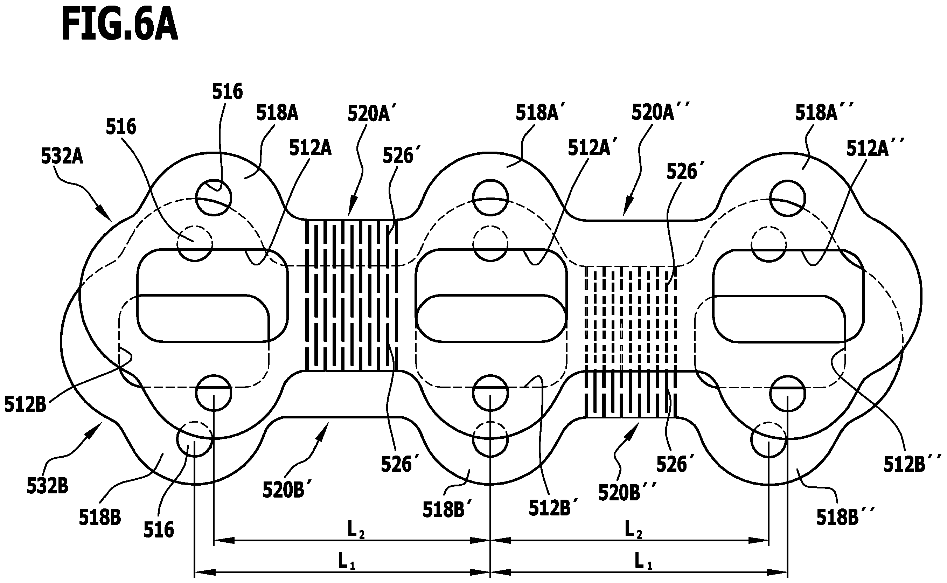

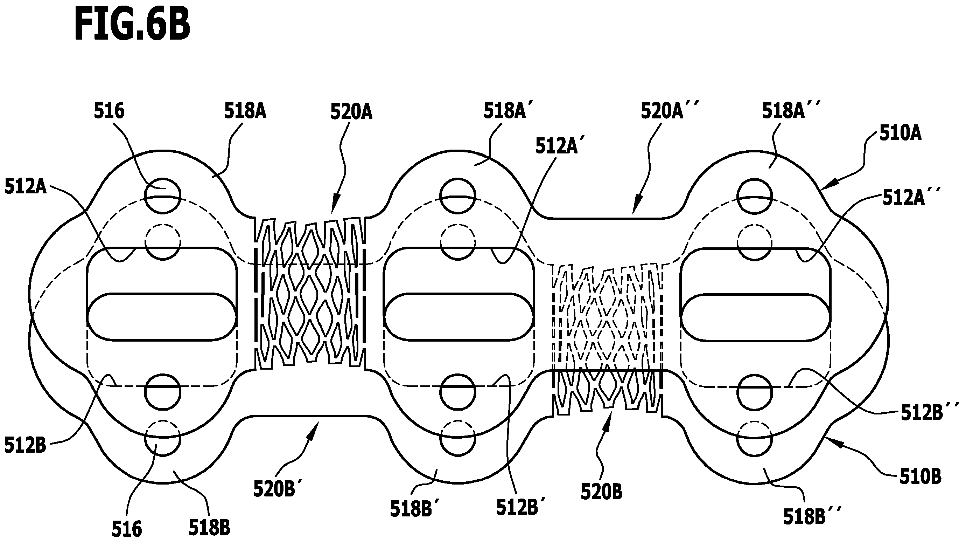

Die Fig. 6 zeigt zwei erfindungsgemäße Rohlinge für zwei erfindungsgemäße Flachdichtungslagen, welche in der fertigen Flachdichtung zumindest im Wesentlichen deckungsgleich übereinander angeordnet sind, während in Fig. 6 ein oberer Rohling 532A für die eine Dichtungslage und ein unterer Rohling 532B für die andere Dichtungslage etwas gegeneinander verschoben dargestellt wurden.

Der obere Rohling 532A hat drei erste Lagenbereiche 518A, 518A' und 518A", welche über zweite Lagenbereiche 520A' und 520A" miteinander verbunden sind. Jeder der ersten Lagenbereiche 518A, 518A' und 518A" hat jeweils eine Gasdurchgangsöffnung 512A bzw. 512A' bzw. 512A" sowie Schraubenlöcher 516.

Da die beiden Rohlinge 532A und 532B bis auf einen noch zu beschreibenden Unterschied identisch gestaltet sein sollen, wurden in Fig. 6 nur die ersten Lagenbereiche des Rohlings 532A mit 518A, 518A' und 518A" und dessen zweite Lagenbereiche mit 520A' und 520A" bezeichnet, und die entsprechenden Lagenbereiche des Rohlings 532B wurden mit 518B, 518B' und 518B" bzw. 520B' und 520B" gekennzeichnet.

Die in Fig. 6 gezeigte Ausführungsform zeichnet sich nun dadurch aus, dass nur der zweite Lagenbereich 520A' des Rohlings 521A und nur der zweite Lagenbereich 520B" des Rohlings 532B mit Stanzschnitten 526' versehen wurden, so dass bei der Herstellung der beiden Dichtungslagen aus den Rohlingen 532A und 532B nur der zweite Lagenbereich 520A' des Rohlings 532A und nur der zweite Lagenbereich 520B" des Rohlings 532B gereckt werden, und zwar in gemäß Fig. 6 horizontaler Richtung.

Damit in der einbaufertigen Flachdichtung die Gasdurchgangsöffnungen 512A und 512B einerseits und die Gasdurchgangsöffnungen 512A" und 512B" andererseits jeweils deckungsgleich übereinander liegen, weist der nicht zu reckende zweite Lagenbereich 520A" des Rohlings 532A eine größere Länge (in gemäß Fig. 6A horizontaler Richtung gemessen) auf als der reckbare zweite Lagenbereich 520A', welcher bei der Herstellung der einbaufertigen Dichtungslage aus dem Rohling 532A um ein solches Maß gereckt wird (wiederum in gemäß Fig. 6A horizontaler Richtung), dass der so aus dem Lagenbereich 520A' gebildete zweite Lagenbereich der fertigen Dichtungslage die gleiche Länge aufweist wie der zweite Lagenbereich 520A" des Rohlings 532A. Entsprechendes gilt für den anderen Rohling 532B sowie dessen zweite Lagenbereiche 520B" und 520B'.

Die vorstehend geschilderten Abmessungsverhältnisse wurden in Fig. 6A durch die Längen L₁ und L₂ verdeutlicht, welche die Abstände der Schraubenlöcher 516 der beiden Rohlinge 532A und 532B zu beiden Seiten der zweiten Lagenbereiche der beiden Rohlinge angeben, wobei L₁ größer ist als L₂.

Für die Darstellung der aus den beiden Rohlingen 532A und 532B gewonnenen und in Fig. 6B mit 510A und 510B bezeichneten Dichtungslagen wurden in Fig. 6B für diejenigen Elemente der beiden Dichtungslagen, welche beim Recken der beiden Rohlinge unverändert bleiben, dieselben Bezugszeichen verwendet wie in Fig. 6A. Durch das Recken der beiden Rohlinge 532A und 532B ergeben sich jedoch aus den zweiten Lagenbereichen 520A' und 520B" der beiden Rohlinge die zweiten Lagenbereiche 520A und 520B der Dichtungslagen 510A und 510B.

Aus den Figuren 6A und 6B ergibt sich das Prinzip für eine Anwendung der vorliegenden Erfindung auf eine mehrlagige Flachdichtung, wonach mehrere erfindungsgemäß gestaltete Dichtungslagen bzw. deren Rohlinge jeweils mehrere zweite Lagenbereiche aufweisen, welche nicht alle gereckt bzw. reckbar sind, wobei ein gereckter zweiter Lagenbereich einer Dichtungslage über einem nicht gereckten zweiten Lagenbereich einer anderen Dichtungslage liegt (bei aufeinandergeschichtete Dichtungslagen), was zu einer Verbesserung der Steifigkeit des Lagenpakets bzw. der Flachdichtung führt. Dennoch wird auch durch eine solche Ausführungsform erreicht, dass für die Herstellung der Dichtungslage bzw. der Dichtungslagen mit mindestens einem gereckten zweiten Lagenbereich deutlich weniger Material benötigt wird, nämlich für die Herstellung des für eine solche Dichtungslage verwendeten Rohlings.

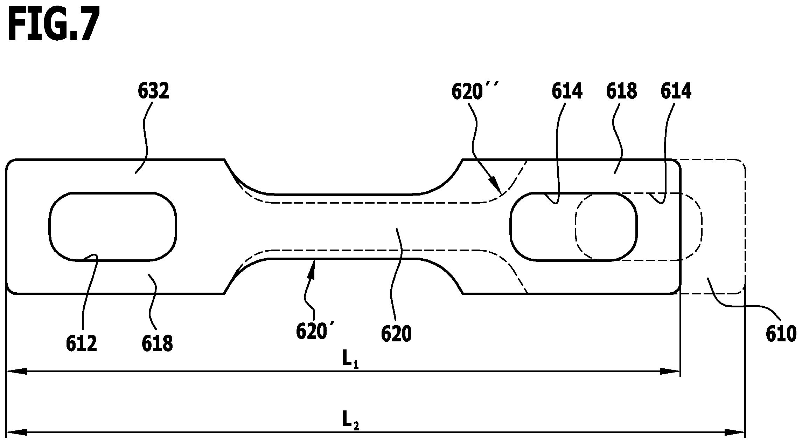

Schließlich zeigt die Fig. 7 noch eine weitere Ausführungsform der Erfindung, und zwar mit durchgehenden Linien einen erfindungsgemäßen Rohling 632 für eine erfindungsgemäße Flachdichtungslage 610, welche, soweit sie in ihren Konturen nicht mit dem Rohling 632 übereinstimmt, mit gestrichelten Linien dargestellt wurde.

Der Rohling 632 hat zwei erste Lagenbereiche 618 mit jeweils einer Gasdurchgangsöffnung 612 bzw. 614 und einen diese beiden ersten Lagenbereiche miteinander verbindenden zweiten Lagenbereich 620', welcher gegenüber den ersten Lagenbereichen 618 verjüngt ist, und zwar bei der dargestellten bevorzugten Ausführungsform dadurch, dass der zweite Lagenbereich 620' eine geringere mittlere Breite aufweist als die ersten Lagenbereiche 618, so dass sich der zweite Lagenbereich 620' in gemäß Fig. 7 horizontaler Richtung mit verhältnismäßig geringen Kräften recken lässt.

Beim Recken des zweiten Lagenbereichs 620' ergibt sich an diesem eine Einschnürung 620", das heißt eine Verminderung der mittleren Breite dieses Lagenbereichs und gleichzeitig eine Vergrößerung seiner Länge, so dass die durch das Recken erhaltene Flachdichtungslage 610 eine Länge L₂ aufweist, welche größer ist als die Länge L₁ des Rohlings 632. Das Recken des Rohlings 632 wird dabei so durchgeführt, dass die Konturen der ersten Lagenbereiche 618 zumindest im Wesentlichen unverändert erhalten bleiben.

Wie bereits erwähnt, ist es auch als im Rahmen der vorliegenden Erfindung anzusehen, dass Mediendurchgangsöffnungen und sonstige Öffnungen und Löcher einer erfindungsgemäßen Flachdichtungslage erst nach dem Recken des Rohlings erzeugt, das heißt insbesondere ausgestanzt werden, und Gleiches gilt beispielsweise für das Einprägen von insbesondere Mediendurchgangsöffnungen umschließenden Abdichtsicken in die Blechlage. Schließlich ist es auch als im Rahmen der vorliegenden Erfindung liegend anzusehen, dass nach dem Recken des Rohlings die Konturen der Flachdichtungslage noch nachbearbeitet werden, insbesondere durch einen weiteren Stanzvorgang.

Bei einer mehrlagigen erfindungsgemäßen Flachdichtung können für die Dichtungslagen unterschiedliche und insbesondere unterschiedlich teure Metalle verwendet werden; dies gilt insbesondere für eine zwischen einem Zylinderkopf und einem Abgaskrümmer eines Verbrennungsmotors zu installierende Abgaskrümmerdichtung, bei der es empfehlenswert sein kann, für eine dem höhere Betriebstemperaturen aufweisenden Abgaskrümmer zugewandte Dichtungslage einen gegen höhere Temperaturen beständigen und deshalb teureren Stahl zu verwenden als für eine dem Zylinderkopf zugekehrte Dichtungslage. In diesem Fall kann es empfehlenswert sein, die vorliegende Erfindung nur auf die dem heißeren Motorbauteil zugekehrte Dichtungslage anzuwenden.

## Patentansprüche

1. Flachdichtung mit mindestens einer eine Lagenebene definierenden einstückigen Metallblech-Dichtungslage, welche mindestens einen mit mindestens einer Mediendurchgangsöffnung versehenen ersten Lagenbereich sowie, in einer Draufsicht auf die Blechlage, außerhalb des ersten Lagenbereichs mindestens einen zweiten Lagenbereich und bei einbaufertiger Flachdichtung eine vorgegebene Außenkontur aufweist, wobei die Flachdichtung für die Mediendurchgangsöffnung eine Letzterer zugeordnete Medienabdichtvorrichtung aufweist,
**dadurch gekennzeichnet, dass** mindestens ein in einer Draufsicht auf die Dichtungslage außerhalb der Medienabdichtvorrichtung liegender Teilbereich des zweiten Lagenbereichs der einbaufertigen Flachdichtung von einem zur Erzielung der vorgegebenen Außenkontur in der Lagenebene gereckten, zumindest örtlich von plastisch verformten Zonen des Metallblechs gebildeten Bereich der Blechlage gebildet wird.

2. Flachdichtung nach Anspruch 1, **dadurch gekennzeichnet, dass** der gereckte Teilbereich in einer Draufsicht auf die Dichtungslage zwischen schräg zueinander verlaufenden Blechstegen wenigstens eine Aussparung aufweist.

3. Flachdichtung nach Anspruch 2, **dadurch gekennzeichnet, dass** die Blechlage mehrere erste Lagenbereiche aufweist und wenigstens zwei einander benachbarte erste Lagenbereiche über mindestens einen zweiten Lagenbereich miteinander verbunden sind, dessen Blechstege schräg zur Richtung einer geraden Linie verlaufen, welche die ersten Lagenbereiche miteinander verbindet.

4. Flachdichtung nach Anspruch 2, **dadurch gekennzeichnet, dass** in einer Draufsicht auf die Blechlage der zweite Lagenbereich einen nach außen vorspringenden Vorsprung bildet und die Blechstege mit derjenigen Richtung, in welcher der Vorsprung im Wesentlichen über die übrige Blechlage übersteht, einen Winkel bilden.

5. Flachdichtung nach einem der Ansprüche 2 bis 4, **dadurch gekennzeichnet, dass** der Teilbereich von einem Streckmetallbereich der Blechlage gebildet wird.

6. Rohling einer einstückigen Metallblechlage einer Flachdichtung, deren Metallblechlage bei einbaufertiger Flachdichtung eine vorgegebene Außenkontur aufweist, wobei der Rohling mindestens einen mit mindestens einer Mediendurchgangsöffnung versehenen ersten Lagenbereich sowie, in einer Draufsicht auf den Rohling, außerhalb des ersten Lagenbereichs mindestens einen zweiten Lagenbereich und eine vorläufige Außenkontur aufweist, **dadurch gekennzeichnet, dass** die vorläufige Außenkontur in einer vom ersten zum zweiten Lagenbereich führenden Richtung kleiner als die vorgegebene Außenkontur ist und die Blechlage aus einem in der Lagenebene verformbaren metallischen Material besteht und in mindestens einem Teilbereich des zweiten Lagenbereichs so gestaltet ist, dass dieser Teilbereich durch eine Zugbeanspruchung in der Lagenebene und in der vorgenannten Richtung reckbar und dadurch die vorläufige Außenkontur des Rohlings in der vorgenannten Richtung bis zu der vorgegebenen Außenkontur vergrößerbar ist.

7. Rohling nach Anspruch 6, **dadurch gekennzeichnet, dass** der Teilbereich des zweiten Lagenbereichs mehrere Durchbrüche aufweist, welche in einer Draufsicht auf die Blechlage so gestaltet, orientiert und angeordnet sind, dass die Durchbrüche durch eine Zugbeanspruchung des Rohlings in der Lagenebene und in einer vom ersten zum zweiten Lagenbereich führenden Richtung aufweitbar und dadurch die vorläufige Außenkontur des Rohlings in Richtung der Zugbeanspruchung vorgebbar vergrößerbar ist.

8. Rohling nach Anspruch 7, **dadurch gekennzeichnet, dass** mindestens mehrere der Durchbrüche von linienförmigen Stanzschnitten gebildet werden.

9. Rohling nach Anspruch 7 oder 8, **dadurch gekennzeichnet, dass** mindestens einer der Durchbrüche von einer sich durch die Blechlage hindurch erstreckenden Aussparung gebildet wird.

10. Rohling nach einem der Ansprüche 7 bis 9, **dadurch gekennzeichnet, dass** die Durchbrüche länglich gestaltet sind und im Wesentlichen quer zur Richtung der vorgegebenen Vergrößerung der Außenkontur des Rohlings verlaufen.

11. Rohling nach Anspruch 10, **gekennzeichnet durch** mehrere Gruppen von länglichen Durchbrüchen, wobei jede Gruppe mehrere in Längsrichtung der Durchbrüche hintereinander angeordnete Durchbrüche aufweist und die Durchbrüche einer jeden Gruppe gegenüber den Durchbrüchen einer benachbarten Gruppe in Längsrichtung der Durchbrüche versetzt sind.

12. Rohling nach einem der Ansprüche 7 bis 11, **gekennzeichnet durch** mehrere erste Lagenbereiche, von denen wenigstens zwei einander benachbarte erste Lagenbereiche über mindestens einen zweiten Lagenbereich miteinander verbunden sind, dessen Durchbrüche länglich gestaltet sind und quer zu einer geraden Linie verlaufen, welche die einander benachbarten ersten Lagenbereiche miteinander verbindet.

13. Rohling nach einem der Ansprüche 7 bis 11, **dadurch gekennzeichnet, dass** in einer Draufsicht auf den Rohling der zweite Lagenbereich einen nach außen vorspringenden Vorsprung bildet und die länglich gestalteten Durchbrüche quer zu derjenigen Richtung verlaufen, in welcher der Vorsprung im Wesentlichen über den übrigen Rohling übersteht.

14. Verfahren zur Herstellung einer einstückigen Metallblech-Flachdichtungslage, welche bei einbaufertiger Flachdichtung eine vorgegebene endgültige Außenkontur, mindestens einen mit mindestens einer Mediendurchgangsöffnung versehenen ersten Lagenbereich sowie, in einer Draufsicht auf die Dichtungslage, außerhalb des ersten Lagenbereichs mindestens einen zweiten Lagenbereich aufweist und eine Lagenebene definiert, **dadurch gekennzeichnet, dass** aus einem Metallblech ein Dichtungslagenrohling mit einer vorläufigen Außenkontur ausgeschnitten wird, welche in mindestens einer in der Lagenebene liegenden ersten Richtung kleiner als die endgültige Außenkontur der Flachdichtungslage ist, und dass mindestens ein Teilbereich des zweiten Lagenbereichs durch eine in der ersten Richtung erfolgende Zugbeanspruchung des Rohlings so gereckt wird, dass dadurch die vorläufige Außenkontur zumindest im Wesentlichen in die endgültige Außenkontur überführt wird.

15. Verfahren nach Anspruch 14, **dadurch gekennzeichnet, dass** in dem Teilbereich des zweiten Lagenbereichs mehrere Durchbrüche erzeugt werden, welche in einer Draufsicht auf den Rohling so gestaltet, orientiert und angeordnet sind, dass durch die Zugbeanspruchung des Rohlings die Durchbrüche in der ersten Richtung aufweitbar sind, und dass der Teilbereich durch die Zugbeanspruchung gereckt und dabei so verformt wird, dass dadurch die Durchbrüche in der ersten Richtung aufgeweitet werden und die vorläufige Außenkontur zumindest im Wesentlichen in die endgültige Außenkontur überführt wird.

16. Verfahren nach Anspruch 15, **dadurch gekennzeichnet, dass** der gereckte Teilbereich flachgepresst wird.

## Claims

1. Flat seal having at least one single-piece sheet-metal seal layerdefining a layer plane, which has at least one first layer region provided with at least one medium through opening and, seen in a plan view of the sheet-metal layer, outside the first layer region, at least one second layer region and with the flat seal installation-ready, has a pre-determined outer contour, wherein the flat seal for the medium through opening has a medium-sealing device which is associated with said medium through opening, **characterised in that**, at least one sub-region of the second layer region of the installation-ready flat seal lying, when seen in a plan view of the seal layer, outside the medium-sealing device is formed by a region of the sheet-metal layer that is stretched in the layer plane to achieve the pre-determined outer contour, said stretched sub-region being formed at least locally by plastically deformed zones of the metal sheet.

2. Flat seal according to claim 1, **characterised in that** the stretched sub-region, seen in a plan view of the seal layer, has at least one cut-out between sheet-metal webs extending inclined to one another.

3. Flat seal according to claim 2, **characterised in that** the sheet-metal layer has a plurality of first layer regions and at least two mutually adjacent first layer regions are connected to one another by means of at least one second layer region, the sheet-metal webs of said second layer region extending inclined to the direction of a straight line which connects the first layer regions to one another.

4. Flat seal according to claim 2, **characterised in that**, seen in a plan view of the sheet-metal layer, the second layer region forms an outwardly extending projection and the sheet-metal webs form an angle to the direction in which the projection basically extends beyond the remaining sheet-metal layer.

5. Flat seal according to one of claims 2 to 4, **characterised in that** the sub-region is formed by an expanded metal region of the sheet-metal layer.

6. Blank of a single-piece sheet-metal layer of a flat seal, the sheet-metal layer of which in an installation-ready flat seal has a pre-determined outer contour, wherein the blank has at least one first layer region provided with at least one medium through opening and, seen in a plan view of the blank, outside the first layer region has at least one second layer region and a preliminary outer contour, **characterised in that** the preliminary outer contour is smaller in a direction leading from the first to the second layer region than the pre-determined outer contour and the sheet-metal layer consists of a metallic material which is configured to be deformable in the layer plane and, in at least one sub-region of the second layer region, is configured so that said sub-region is stretchable by a tensile loading in the layer plane and in the aforementioned direction and thereby the preliminary outer contour of the blank is enlargeable in the aforementioned direction up to the pre-determined outer contour.

7. Blank according to claim 6, **characterised in that** the sub-region of the second layer region has a plurality of perforations which, seen in a plan view of the sheet-metal layer, are configured, oriented and arranged so that the perforations are expandable by means of a tensile loading of the blank in the layer plane and in a direction leading from the first to the second layer region and thereby the preliminary outer contour of the blank is enlargeable in the direction of the tensile loading in a predeterminable manner.

8. Blank according to claim 7, **characterised in that** at least a plurality of the perforations are formed by linear stamping cuts.

9. Blank according to claim 7 or 8, **characterised in that** at least one of the perforations is formed by a cut-out extending through the sheet-metal layer.

10. Blank according to one of claims 7 to 9, **characterised in that** the perforations are configured elongate and extend substantially transversely to the direction of the pre-determined enlargement of the outer contour of the blank.

11. Blank according to claim 10, **characterised by** a plurality of groups of elongate perforations, wherein each group has a plurality of the perforations arranged one behind the other in the longitudinal direction of the perforations and the perforations of each group are offset in the longitudinal direction of the perforations relative to the perforations of an adjacent group.

12. Blank according to one of claims 7 to 11, **characterised by** a plurality of first layer regions, of which at least two mutually adjacent first layer regions are connected to one another by means of at least one second layer region, the perforations of said second layer region being configured elongate and extending transversely to a straight line which connects the mutually adjacent first layer regions to one another.

13. Blank according to one of claims 7 to 11, **characterised in that**, seen in a plan view of the blank, the second layer region forms an outwardly extending projection and the elongate formed perforations extend transversely to the direction in which the projection basically extends beyond the remaining blank.

14. Method for manufacturing a single-piece sheet-metal flat seal layer which, in the installation-ready flat seal, has a pre-determined final outer contour, at least one first layer region provided with at least one medium through opening and, seen in a plan view of the seal layer, outside the first layer region, has at least one second layer region and defines a layer plane, **characterised in that** from a metal sheet, a seal layer blank with a preliminary outer contour is cut out, which is smaller in at least a first direction lying in the layer plane than the final outer contour of the flat seal layer, and **in that** at least one sub-region of the second layer region is stretched by means of a tensile loading of the blank carried out in the first direction so that the preliminary outer contour is thereby transformed at least substantially into the final outer contour.

15. Method according to claim 14, **characterised in that** in the sub-region of the second layer region, a plurality of perforations are produced which, seen in a plan view of the blank, are configured, oriented and arranged so that, by means of the tensile loading of the blank, the perforations are expandable in the first direction and **in that** the sub-region is stretched by means of the tensile loading and is thereby deformed so that in this way the perforations are expanded in the first direction and the preliminary outer contour is transformed at least substantially into the final outer contour.

16. Method according to claim 15, **characterised in that** the stretched sub-region is pressed flat.

## Revendications

1. Garniture d'étanchéité plate avec au moins une couche d'étanchéité en tôle métallique en une seule pièce définissant un plan de couche, laquelle couche d'étanchéité en tôle métallique présente au moins une première région de couche dotée d'au moins une ouverture de passage d'un milieu, ainsi que, dans une vue de dessus sur la couche de tôle, au moins une deuxième région de couche à l'extérieur de la première région de couche et, dans le cas d'une garniture d'étanchéité à l'état monté, un contour extérieur prédéfini, dans laquelle la garniture d'étanchéité plate présente un dispositif d'étanchéification de milieu attribué à cette dernière pour l'ouverture de passage d'un milieu,
**caractérisée en ce qu'**au moins une région partielle de la deuxième région de couche de la garniture d'étanchéité plate à l'état monté se situant, dans une vue de dessus sur la couche d'étanchéité, à l'extérieur du dispositif d'étanchéification de milieu est formée par une région de la couche de tôle étirée pour obtenir le contour extérieur prédéfini dans le plan de couche et formée au moins localement de zones plastiquement déformées de la tôle métallique.

2. Garniture d'étanchéité plate selon la revendication 1, **caractérisée en ce que** la région partielle étirée présente, dans une vue de dessus sur la couche d'étanchéité, au moins un évidement entre des barrettes de tôle se déroulant de façon oblique les unes aux autres.

3. Garniture d'étanchéité plate selon la revendication 2, **caractérisée en ce que** la couche de tôle présente plusieurs premières régions de couche et au moins deux premières régions de couche avoisinantes les unes aux autres sont reliées ensemble par au moins une deuxième région de couche, dont les barrettes de tôle se déroulent de façon oblique à la direction d'une ligne droite, laquelle relie ensemble les premières régions de couche.

4. Garniture d'étanchéité plate selon la revendication 2, **caractérisée en ce que**, dans une vue de dessus sur la couche de tôle, la deuxième région de couche forme une saillie faisant saillie vers l'extérieur et les barrettes de tôle forment un angle avec la direction dans laquelle la saillie dépasse essentiellement par-dessus le reste de la couche de tôle.

5. Garniture d'étanchéité plate selon l'une des revendications 2 à 4, **caractérisée en ce que** la région partielle est formée par une région en métal déployé de la couche de tôle.

6. Ébauche d'une couche en tôle métallique en une seule pièce d'une garniture d'étanchéité plate dont la couche en tôle métallique présente un contour extérieur prédéfini dans le cas d'une garniture d'étanchéité à l'état monté, dans laquelle l'ébauche présente au moins une première région de couche dotée d'au moins une ouverture de passage d'un milieu, ainsi que, dans une vue de dessus sur l'ébauche, au moins une deuxième région de couche et un contour extérieur provisoire à l'extérieur de la première région de couche, **caractérisée en ce que** le contour extérieur provisoire est plus petit que le contour extérieur prédéfini dans une direction menant de la première à la deuxième région de couche et la couche de tôle est constituée d'un matériau métallique pouvant être déformé dans le plan de couche et est conçue dans au moins une région partielle de la deuxième région de couche de telle sorte que cette région partielle puisse être étirée par un effort de traction dans le plan de couche et dans ladite direction et ce faisant le contour extérieur provisoire de l'ébauche puisse être agrandi dans ladite direction jusqu'à obtenir le contour extérieur prédéfini.

7. Ébauche selon la revendication 6, **caractérisée en ce que** la région partielle de la deuxième région de couche présente plusieurs percées, lesquelles, dans une vue de dessus sur la couche de tôle, sont conçues, orientées et agencées de telle sorte que les percées puissent être élargies par un effort de traction de l'ébauche dans le plan de couche et dans une direction menant de la première à la deuxième région de couche et ce faisant le contour extérieur provisoire de l'ébauche puisse être agrandi de façon prédéfinissable dans la direction de l'effort de traction.

8. Ébauche selon la revendication 7, **caractérisée en ce qu'**au moins plusieurs des percées sont formées de découpes d'estampage en forme de lignes.

9. Ébauche selon la revendication 7 ou 8, **caractérisée en ce qu'**au moins une des percées est formée par un évidement s'étendant à travers la couche de tôle.

10. Ébauche selon l'une des revendications 7 à 9, **caractérisée en ce que** les percées sont conçues de façon allongée et se déroulent essentiellement transversalement à la direction de l'agrandissement prédéfini du contour extérieur de l'ébauche.

11. Ébauche selon la revendication 10, **caractérisée par** plusieurs groupes de percées allongées, dans laquelle chaque groupe présente plusieurs percées agencées les unes derrières les autres dans la direction longitudinale des percées et les percées de chaque groupe par rapport aux percées d'un groupe avoisinant sont décalées dans la direction longitudinale des percées.

12. Ébauche selon l'une des revendications 7 à 11, **caractérisée par** plusieurs premières régions de couche dont au moins deux premières régions de couche avoisinantes les unes aux autres sont reliées ensemble par au moins une deuxième région de couche, dont les percées sont conçues de façon allongée et se déroulent transversalement à une ligne droite, laquelle relie ensemble les premières régions de couche avoisinantes les unes aux autres.

13. Ébauche selon l'une des revendications 7 à 11, **caractérisée en ce que**, dans une vue de dessus sur l'ébauche, la deuxième région de couche forme une saillie faisant saillie vers l'extérieur et les percées conçues de façon allongée se déroulent transversalement à la direction dans laquelle la saillie dépasse essentiellement par-dessus le reste de l'ébauche.

14. Procédé de fabrication d'une couche de garniture d'étanchéité plate en tôle métallique en une seule pièce, laquelle présente, dans le cas d'une garniture d'étanchéité à l'état monté, un contour extérieur définitif prédéfini, au moins une première région de couche dotée d'au moins une ouverture de passage d'un milieu, ainsi que, dans une vue de dessus sur la couche d'étanchéité, au moins une deuxième région de couche à l'extérieur de la première région de couche, et définit un plan de couche, **caractérisé en ce que** dans une tôle métallique est découpée une ébauche de couche d'étanchéité avec un contour extérieur provisoire, lequel est plus petit que le contour extérieur définitif de la couche de garniture d'étanchéité plate dans au moins une première direction se situant dans le plan de couche, et **en ce qu'**au moins une région partielle de la deuxième région de couche est étirée par un effort de traction de l'ébauche se produisant dans la première direction de telle sorte que ce faisant le contour extérieur provisoire soit transformé au moins essentiellement en le contour extérieur définitif.

15. Procédé selon la revendication 14, **caractérisé en ce que** dans la région partielle de la deuxième région de couche sont produites plusieurs percées, lesquelles, dans une vue de dessus sur l'ébauche, sont conçues, orientées et agencées de telle sorte que les percées puissent être élargies dans la première direction par l'effort de traction de l'ébauche, et **en ce que** la région partielle est étirée par l'effort de traction et moyennant quoi est déformée de telle sorte que ce faisant les percées soient élargies dans la première direction et le contour extérieur provisoire soit transformé au moins essentiellement en le contour extérieur définitif.

16. Procédé selon la revendication 15, **caractérisé en ce que** la région partielle étirée est comprimée à plat.
